# EUROPÄISCHE PATENTSCHRIFT

(11) **EP 0 658 464 B1**
(45) Veröffentlichungstag und Bekanntmachung des Hinweises auf die Patenterteilung: **02.07.1997**
(21) Anmeldenummer: 94116537.5
(22) Anmeldetag: 20.10.1994
(51) Int. Cl.: B61D 27/00, F24F 13/10

(54) **Druckwellenventil**
Protection valve against pressure waves
Vanne de protection contre des ondes de surpression

(30) Priorität: 18.12.1993 DE 9319512 U
(43) Veröffentlichungstag der Anmeldung: 21.06.1995
(73) Patentinhaber: HAGENUK FAHRZEUGKLIMA GmbH, D-04435 Schkeuditz (DE)
(72) Erfinder: Adolph, Ulrich, Dr.-Ing., D-04159 Leipzig (DE); Coldewey, Maik, D-01917 Kamenz (DE); Eichholz, Stefan, D-24148 Kiel (DE); Schmerler, Michael, D-06116 Halle/S. (DE)
(74) Vertreter: Köckeritz, Günter

(56) Entgegenhaltungen:
- EP-A- 0 409 779
- DE-A- 3 045 396
- DE-B- 1 264 018

## Beschreibung

Die Erfindung betrifft ein Druckwellenventil zur Verhinderung des Eindringens von unzulässigen Luftdrücken in Fahrzeugen.

Druckwellenventile dienen in schnellfahrenden Zügen dazu, bei Druckstößen infolge von Zugbegegnungen, Tunnelfahrten u.ä., deren unangenehme Wirkung auf die Fahrgäste durch schnelles Schließen der Frischluftöffnungen zu verhindern.

Bei den bisher eingesetzten mechanisch betätigten Druckwellenventilen werden im allgemeinen Flächendichtungen zur Abdichtung des Luftstromes durch Verschieben von Lamellen oder dem Ausheben und Aufdrücken von Lamellen verwendet.

Eine solche Einrichtung ist aus der DE-PS 36 18 292 bekannt.

Diese Verfahren haben den Nachteil, daß durch den immer vorhandenen Schmutz in der Luft, Ablagerungen an den Druckwellenventilen auftreten und damit die Abdichtflächen verschmutzt werden, was dann gewöhnlich durch Verschleiß und Undichtheiten zu Funktionsstörungen der Einrichtungen führt.

Bei Temperaturen um den Gefrierpunkt kann es, bedingt durch geringe Spalten zwischen Flächendichtung und Gehäuse des Druckwellenventils, zum Festfrieren der Flächendichtung kommen. Damit ist die Funktion nicht mehr gewährleistet.

Ein weiterer Nachteil der bekannten Einrichtungen besteht darin, daß im Falle des nur teilweise besetzten Wagens die Luftquerschnitte vollständig öffnen und damit mehr als die unmittelbar erforderliche Frischluftmenge eintritt, die dann entweder geheizt oder gekühlt werden müssen, was zu einem unnötig hohen Energieverbrauch führt.

Der im Anspruch 1 angegebenen Erfindung liegt das Problem zugrunde, ein Druckwellenventil zu schaffen, welches trotz der genannten Umwelteinflüsse eine hohe Funktionssicherheit gewährleistet sowie gleichzeitig eine Regulierung der Frischluft, die den Passagieren entsprechend den hygienischen Vorschriften zuzuführen ist, sicherstellt.

Dieses Problem wird mit den Maßnahmen des Anspruchs 1 gelöst. Vorteilhafte Weiterbildungen der Erfindung sind in den Ansprüchen 2 bis 6 angegeben.

Mit der Erfindung wird im angegebenen Anwendungsfall erreicht, daß trotz bestehender negativer Umwelteinflüsse auf die Einrichtung eine hohe Funktionssicherheit derselben gewährleistet ist.

Weiterhin ermöglicht die Erfindung, daß über eine Verstelleinrichtung die Ausgangsposition des Schließvorgangs zur Frischluftmengenregulierung verstellt werden kann, wodurch immer eine ausreichende Versorgung der Passagiere entsprechend den hygienischen Vorschriften sichergestellt ist bzw. nur so viel Frischluft, wie erforderlich, eingelassen wird.

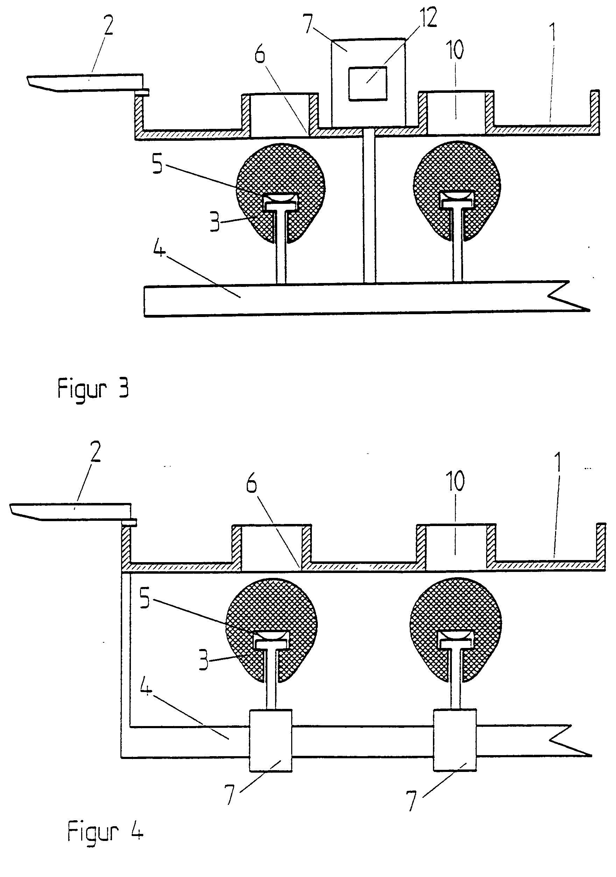

Ein Ausführungsbeispiel der Erfindung wird anhand der Figuren 1 bis 4 erläutert.
Es zeigen:
- Fig. 1: Druckwellenventil mit Motor-Exentereinheit
- Fig. 2: Druckwellenventil mit gesteuertem Linearantrieb
- Fig. 3: Druckwellenventil mit elektronischer Wegerkennungseinrichtung
- Fig. 4: Druckwellenventil, bei dem die Dichtprofile einzeln oder in Gruppen mit Verstelleinrichtungen verbunden sind.

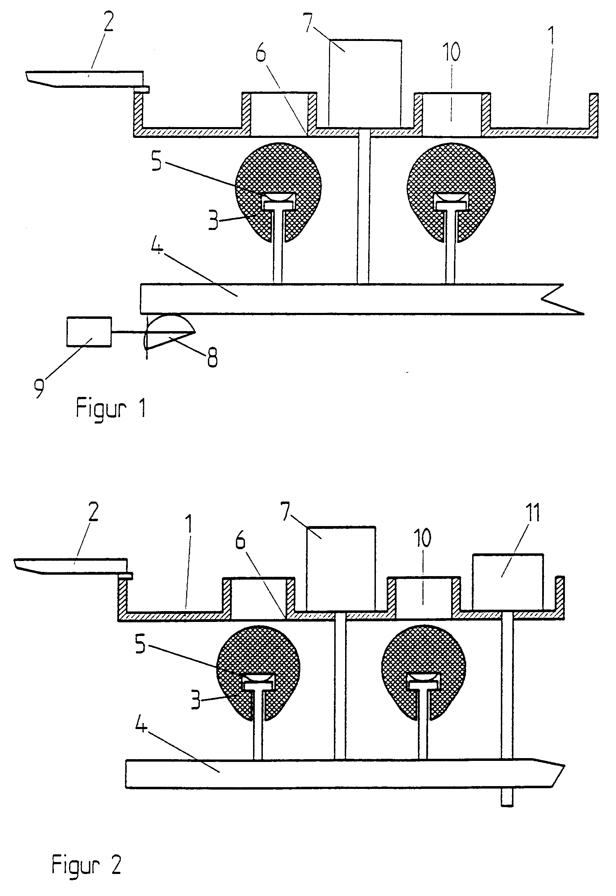

In Fig. 1 ist der sinngemäße Aufbau des Druckwellenventils skizziert.

Ein Ventilkörper 1, vorzugsweise aus Metall gefertigt, ist mit Schlitzdurchlässen versehen, welche gegebenenfalls auch als Durchzüge ausgebildet sein können. Dieser Ventilkörper ist meist mit einer Fahrzeugkontur 2 dicht verschraubt bzw. verbunden.

Diese Schlitzdurchbrüche 10 sind mit Dichtprofilen 3, vorzugsweise aus Kunststoffmaterial, im geschlossenen Zustand des Druckwellenventils, abgedichtet. Diese Dichtprofile vereinen durch ihre spezielle Gestaltung zwei Funktionen:
a) gute Abdichtung im geschlossenen Zustand,
b) Verminderung der Druckverluste beim Durchströmen des Druckwellenventils im geöffneten Zustand.

Die Dichtung erfolgt an den speziell ausgeformten Dichtkanten 6 des Ventilkörpers 1, welche so ausgeformt sind, daß sich rundum eine Linienbeziehung mit dem Dichtprofil 3 ergibt. Auf Grund der Strömungsgeschwindigkeit tritt bei Öffnen und Schließen des Druckwellenventils jedesmal ein Säuberungseffekt auf. Der oder die vorwiegend pneumatischen Betätigungszylinder 7 heben und senken das Betätigungsgestänge 4 und bewegen damit gleichzeitig die Dichtprofile 3. Die Dichtprofile 3 passen sich durch Wahl eines elastischen Werkstoffs und durch die Federelemente 5 an den Verbindungsstellen zu den Betätigungsstangen an. Dieses dient dem Toleranz- und Verschleißausgleich und gewährleistet einen guten Dämpfungseffekt.

Die durchzusetzende Luftmenge kann in Abhängigkeit spezieller Parameter über den Öffnungsquerschnitt der Dichtprofile reguliert werden. Dieses kann durch vier Prinzipien geschehen:
a) Figur 1
   Eine Motor-Exentereinheit 8 bzw. 9 dient der Anschlagbegrenzung beim Öffnen. Damit kann in Abhängigkeit von der erforderlichen Frischluftmenge der Exenteranschlag 8 so eingestellt werden, daß der Spalt zwischen den Profilen 3 und Ventilkörper 1 veränderlich ist und damit die einströmende Luftmenge geregelt werden kann.
b) Figur 2
   Eine Begrenzung des Kolbenstangenweges der Peumatikeinheit wird durch einen gesteuerten Linearantrieb 11 erreicht.
c) Figur 3
   Eine Begrenzung des Kolbenstangenweges erfolgt durch eine Kombination elektronischer Wegerkennung mit speziellen inneren Anschlägen in der Pneumatikeinheit.
d) Figur 4
   Die Dichtprofile 3 werden einzeln oder in Gruppen betätigt und - abhängig vom Luftbedarf - einzeln oder in Gruppen geschlossen gehalten.

Das Druckwellenventil wird über eine Druckauswerteeinheit (hier nicht dargestellt) und entsprechende Signale an den Betätigungszylinder 7 innerhalb von höchstens 80 ms geschlossen. Dies erfolgt bei Auftreten von unzulässigen Druckverhältnissen im Außenraum, so daß der Innenraum für die Zeit der äußeren Druckstörungen verschlossen wird und somit das Befinden der Passagiere nicht beeinträchtigt wird.

## Patentansprüche

1. Druckwellenventil für Fahrzeuge, welches aus einem mit der Fahrzeugkontur dicht verbundenen Ventilkörper mit in bestimmten Abständen angeordneten Öffnungen besteht, dadurch gekennzeichnet, daß an einem Betätigungsgestänge (4) gegenüber jeder Öffnung (10) Dichtprofile (3) angeordnet sind, wobei das Betätigungsgestänge (4) über einen regelbaren pneumatischen Betätigungszylinder (7) beweglich mit dem Ventilkörper (1) verbunden ist.

2. Druckwellenventil nach Anspruch 1 dadurch gekennzeichnet, daß die Dichtprofile (3) abgerundete Oberflächen aufweisen und aus einem elastischen Material bestehen.

3. Druckwellenventil nach den Ansprüchen 1 und 2 dadurch gekennzeichnet, daß die Dichtprofile (3) mit dem Betätigungsgestänge (4) verbunden sind.

4. Druckwellenventil nach den Ansprüchen 1 bis 3 dadurch gekennzeichnet, daß die Dichtprofile (3) durch ein Federelement (5) mit dem Betätigungsgestänge (4) verbunden sind.

5. Druckwellenventil nach den Ansprüchen 1 bis 4 dadurch gekennzeichnet, daß zur Regelung des Kolbenstangenweges des Betätigungszylinders (7) eine Motor-Exentereinheit (8, 9) und/oder ein gesteuerter Linearantrieb (11) und/oder eine elektronische Wegerkennungseinrichtung (12) angeordnet sind.

6. Druckwellenventil nach den Ansprüchen 1 bis 5 dadurch gekennzeichnet, daß die Dichtprofile (3) einzeln oder in Gruppen zur Frischluftmengenregulierung betätigt werden.

## Claims

1. Pressure wave valve for vehicles, which comprises a valve body, which is tightly connected to the vehicle configuration and has apertures disposed at predetermined spacings from one another, characterized in that sealing profiles (3) are disposed on an actuating linkage (4) facing each aperture (10), the actuating linkage (4) being displaceably connected to the valve body (1) via an adjustable pneumatic actuating cylinder (7).

2. Pressure wave valve according to claim 1, characterised in that the sealing profiles (3) have rounded surfaces and are formed from a resilient material.

3. Pressure wave valve according to claims 1 and 2, characterised in that the sealing profiles (3) are connected to the actuating linkage (4).

4. Pressure wave valve according to claims 1 to 3, characterised in that the sealing profiles (3) are connected to the actuating linkage (4) by a resilient element (5).

5. Pressure wave valve according to claims 1 to 4, characterised in that an eccentric engine unit (8, 9) and/or a controlled linear drive (11) and/or an electronic range detector (12) are provided to adjust the piston rod range of the actuating cylinder (7).

6. Pressure wave valve according to claims 1 to 5, characterised in that the sealing profiles (3) are actuated individually or in groups to regulate the quantity of fresh air.

## Revendications

1. Vanne de protection contre des ondes de surpression pour véhicules, laquelle se compose d'un corps de vanne fixé de manière étanche au contour du véhicule, comportant des ouvertures disposées à des écartements déterminés, caractérisée en ce que des profilés d'étanchéité (3) sont disposés sur une tige d'actionnement (4) en face de chaque ouverture (10), la tige d'actionnement (4) étant reliée au corps de vanne (1) de manière permettant le mouvement par l'intermédiaire d'un vérin pneumatique d'actionnement réglable (7).

2. Vanne de protection contre des ondes de surpression suivant la revendication 1, caractérisée en ce que les profilés d'étanchéité (3) présentent des surfaces arrondies et sont fabriqués dans un matériau élastique.

3. Vanne de protection contre des ondes de surpression suivant les revendications 1 et 2, caractérisée en ce que les profilés d'étanchéité (3) sont reliés à la tige d'actionnement (4).

4. Vanne de protection contre des ondes de surpression suivant les revendications 1 à 3, caractérisée en ce que les profilés d'étanchéité (3) sont reliés à la tige d'actionnement (4) par un ressort (5).

5. Vanne de protection contre des ondes de surpression suivant les revendications 1 à 4, caractérisée en ce que, pour la régulation de la course de la tige de piston du vérin d'actionnement (7), on emploie un moteur à excentrique (8, 9) et/ou un entraînement linéaire commandé (11) et/ou un dispositif de reconnaissance électronique du chemin parcouru (12).

6. Vanne de protection contre des ondes de surpression suivant les revendications 1 à 5, caractérisée en ce que les profilés d'étanchéité (3) sont actionnés individuellement ou par groupes pour la régulation de la quantité d'air frais.
